# EUROPÄISCHE PATENTSCHRIFT

(11) **EP 4 341 572 B1**
(45) Veröffentlichungstag und Bekanntmachung des Hinweises auf die Patenterteilung: **05.08.2026**
(21) Anmeldenummer: 22711949.2
(22) Anmeldetag: 08.03.2022
(51) Int. Cl.: F16D 65/097, F16D 65/54, F03G 7/06, F16F 1/02

(54) **SCHEIBENBREMSE FÜR EIN FAHRZEUG**
DISC BRAKE FOR A VEHICLE
FREIN À DISQUE POUR UN VÉHICULE

(30) Priorität: 20.05.2021 DE 102021113070
(43) Veröffentlichungstag der Anmeldung: 27.03.2024
(73) Patentinhaber: Audi AG, 85057 Ingolstadt (DE)
(72) Erfinder: BROK, Tobias, 85092 Kösching (DE)
(86) Internationale Anmeldenummer: PCT/EP2022/055934
(87) Internationale Veröffentlichungsnummer: WO 2022/242925

(56) Entgegenhaltungen:
- WO-A1-2020/128710
- DE-A1- 102017 001 089
- DE-U1- 202015 104 454
- JP-A- 2006 090 464
- JP-A- H07 217 680
- KR-B1- 100 836 342
- US-A1- 2020 040 953

## Beschreibung

Die Erfindung betrifft eine Scheibenbremse für ein Fahrzeug gemäß der im Oberbegriff des Patentanspruches 1 angegebenen Art.

Eine Scheibenbremse für ein Fahrzeug umfasst üblicherweise ein Gehäuse mit einem Bremssattel sowie eine in dem Gehäuse aufgenommene Bremsbelaganordnung, die an einer Bremsscheibe angeordnet ist. Die Bremsbelaganordnung umfasst wenigstens einen Bremsbelag, der eine Belagträgerplatte mit einem Reibbelag aufweist. Die Bremsbeläge können mittels einer Zuspanneinrichtung in Richtung Bremsscheibe bewegt werden, um eine Bremswirkung in einer Eingriffsposition zu erzielen, bei der der Reibbelag mit der rotierenden Bremsscheibe in Wechselwirkung gebracht ist. Für das optimale Funktionieren der Bremsen ist es unerlässlich, dass die Bremsbeläge in Position gehalten werden, beispielsweise mittels Belagniederhaltefedern, Rastklammern oder dergleichen.

Es ist bekannt, dass sich der Bremsbelag nach einem Bremsvorgang nicht kontrolliert in eine Ausgangsposition zurücksetzt, in welcher der Reibbelag gegenüber der Bremsscheibe durch ein sogenanntes Lüftspiel beabstandet ist. So liegt der Bremsbelag nach einem Bremsvorgang zwar drucklos, jedoch schleifend an der Bremsscheibe an und es entsteht eine Restreibung in der Bremse, die einen erhöhten und/oder ungleichmäßigen Verschleiß der Bremsbeläge, ungleichmäßige Schwingungsanregungen und/oder einen erhöhten Fahrwiderstand und somit einen erhöhten Kraftstoffverbrauch zur Folge hat. Um den Reibbelag nach einer Auslenkung in die Ausgangsposition zurückzubewegen, kann eine Rückstellvorrichtung eine Rückstellkraft auf den Bremsbelag ausüben, um ihn aktiv von der Bremsscheibe wegzuziehen. Dadurch sind mögliche noch vorhandene Kontakte bzw. Restreibwerte zwischen Bremsbelag und Bremsscheibe verhindert oder zumindest erheblich reduziert.

In der DE 10 2013 016 779 A1 ist eine Scheibenbremse beschrieben, die einen Bremsträger, eine Bremsbelaganordnung, die einen in dem Bremsträger geführten Reibbelag mit einer Belagträgerplatte sowie einer Rückstellvorrichtung umfasst. Der Reibbelag ist mit einer Bremsscheibe in Wechselwirkung bringbar, um eine Bremswirkung zu erzielen. Die Rückstellvorrichtung umfasst zumindest eine Rückstellfeder, die von dem Bremsträger gestützt ist und dazu eingerichtet ist, eine Rückstellkraft auf die Belagträgerplatte auszuüben, um den Reibbelag nach einer Auslenkung in eine Ausgangsposition zurückzubewegen.

Die DE 10 2016 211 147 A1 beschreibt eine Scheibenbremse für ein Fahrzeug, die einen Bremsträger umfasst in dem ein Bremsbelag reversibel von einer Ausgangsposition in eine Eingriffsposition, bei der der Bremsbelag in Eingriff mit einer Bremsscheibe steht, verschiebbar ist. Die Scheibenbremse weist eine verschleißkompensierende Rückstellvorrichtung auf, die eine Rückstellkraft auf den Bremsbelag ausübt, um den Bremsbelag nach einer Bremsung in die Ausgangsposition zurück zu bewegen. Die Rückstellvorrichtung weist eine mit dem Bremsbelag verbundene Rückstellfeder auf, die den Bremsbelag im unbetätigten Zustand in der Ausgangsposition gegenüber dem Bremsträger hält.

In der FR 3 030 664 A1 ist eine Scheibenbremse für ein Fahrzeug beschrieben, die wenigstens einen Bremsbelag sowie einen Kolben aufweist, der bei einem Bremsvorgang den Bremsbelag gegen die Bremsscheibe presst. Die Scheibenbremse weist mindestens ein Element auf, das in der Lage ist, in einer Eingriffsposition den Bremsbelag und den Kolben relativ zueinander zu beaufschlagen. Das Element weist eine Abmessung entlang einer Richtung parallel zu einer Längsachse des Kolbens auf, die abnimmt, wenn eine Temperatur des Elements zunimmt. Auf diese Weise kompensiert das Element die thermische Kontraktion oder Ausdehnung des Bremssystems, um sicherzustellen, dass ein Bremsdruck insbesondere der Feststellbremse über Zeit erhalten bleibt.

Die FR 3 030 859 A1 beschreibt eine Scheibenbremse für ein Fahrzeug,umfassend eine Bremsbelaganordnungmit wenigstens einem Bremsbelag, eine Bremsscheibe sowie einen Kolben, der bei einem Bremsvorgang in der Lage ist den Bremsbelag gegen die Bremsscheibe zu pressen. Der Bremsbelag ist unter Zwischenlage eines thermischen Aktors mit dem Kolben und/oder einem Bremssattel verbunden. Der thermische Aktor weist einen Bimetallstreifen auf, dessen Metallbänder an ihren jeweiligen Enden miteinander verbunden und mittig durch eine Aussparung getrennt sind, wobei die Metallbänder insbesondere unterschiedliche Wärmeausdehnungskoeffizienten aufweisen. Am Ende eines Bremsvorgangs und/oder in regelmäßigen Intervallen wird der Bimetallstreifen mittels einer Steuereinrichtung kurz erwärmt, um die Aussparung einseitig auszudehnen. Beim Abkühlen zieht sie sich wieder zurück, wodurch der Bremsbelag durch den Bimetallstreifen in eine Ausgangsposition gezogen wird bzw. sich von der Bremsscheibe löst, um ein Restbremsmoment bzw. Restreibwerte zu verhindern.

Die JP 2006 90464 A beschreibt eine Scheibenbremse deren Bremsbelaganordnung gattungsbildende Merkmale aufweist. Ein Bremsbelag, umfassend einen Reibbelag an dem eine Belagträgerplatte angeordnet ist, wird von einem Federelement in einem Bremsabstützkörper gehalten. Das Federelement ist zumindest teilweise aus einem Bimetall-Element derart ausgebildet, dass seine Vorspannkraft in Abhängigkeit einer Temperatur verändert wird. Bei niedriger Temperatur ist der Bremsbelag vergleichsweise stark eingespannt und im Hochtemperaturbereich wird die Haltekraft auf den Bremsbelag reduziert. Dadurch wird das Nachlaufvermögen des Bremsbelags verbessert.

In der JP H07 217680 ist eine Scheibenbremse eines Fahrzeugs offenbart, die jeweils an den Seiten der Bremsscheibe angeordnete Bremsbelagplatten mit jeweils einem Bremsbelag aufweisen. Die Bremsbelagplatten sin durch jeweils ein Federelement federvorgespannt ausgebildet. Das Federelement ist als Bimetall-Element ausgebildet.

Die WO 2020/128710 A1 offenbart eine Scheibenbremse, die jeweils an den Seiten der Bremsscheibe angeordnete Bremsbelagplatten mit jeweils einem Bremsbelag aufweisen. Die Bremsbelagplatten sind mit einer Rastklammer in Umfangsrichtung umgriffen. Die Rastklammer weist für jede Bremsbelagplatte ein Federelement auf.

Eine weitere Scheibenbremse mit jeweils an den Seiten der Bremsscheibe angeordnete Bremsbelagplatten mit jeweils einem Bremsbelag ist in der DE 20 2015 104454 U1 offenbart. Die Bremsbelagplatten sind über ein Brückenelement miteinander verbunden. Zwischen Bremsbelagplatten und Brückenelement sind jeweils zwei Rückhaltefedern ausgebildet.

Insbesondere bei Elektro- und/oder Hybridfahrzeugen kann die beim Bremsen entstandene kinetische Energie durch Rekuperation zurückgewonnen und in den Akku gespeist werden. Aufgrund der abgeführten Wärme kann bei kalten Witterungsbedingungen auf den kalten Bremsscheiben Wasser vereisen, wodurch nahezu kein Reibwert zwischen der Bremsscheibe und dem Reibbelag vorhanden ist und ein Bremsweg sicherheitskritisch verlängert ist.

Es gibt Ansätze anhand von Temperatursensorinformationen die Temperatur an den Radbremsen abzuschätzen und bei entsprechenden Witterungsverhältnissen die Bremsscheiben durch Druckaufbau in der Bremse proaktiv aufzuwärmen. Die Sicherheits- und Verfügbarkeitsanforderungen an eine solche Funktion sowie die Sensorik sind jedoch sehr hoch und aufwändig.

Der Erfindung liegt die Aufgabe zugrunde, eine Fahrzeugscheibenbremse vorzuschlagen, die bei niedrigen Temperaturen eine hohe Bremssicherheit aufweist.

Erfindungsgemäß wird die Aufgabe durch die Merkmalskombination des Anspruches 1 gelöst, die Unteransprüche zeigen vorteilhafte Ausgestaltungsformen der Erfindung.

In bekannter Art und Weise umfasst eine Scheibenbremse für ein Fahrzeug ein rahmenartiges Gehäuse, das eine an einer Bremsscheibe angeordnete Bremsbelaganordnung überspannt. Die Bremsbelaganordnung weist wenigstens einen Bremsbelag auf, der in einem Bremsabstützkörper spielbehaftet geführt bzw. gelagert ist. Der Bremsabstützkörper ist bei einer schwimmenden Sattelbremse als Bremsträger ausgebildet und bei einer Festsattelbremse ist der Bremsabstützkörper als Festsattel ausgeführt, der einteilig als Monoblock oder mehrteilig ausgeführt sein, beispielsweise durch zwei Festsattelhälften.

Die zwischen den Bremsbelägen angeordnete Bremsscheibe ist um eine Achse drehbar an einer Radnabe angeordnet. Zum Erzielen einer Bremswirkung sind die jeweiligen Bremsbeläge mittels einer Zuspannvorrichtung gegensinnig bewegbar, um sie mit der Bremsscheibe in Wechselwirkung zu bringen.

Der Bremsbelag der Bremsbelaganordnung ist mit einer Belagträgerplatte ausgebildet, an der ein Reibbelag angebracht ist. Im eingebauten Zustand der Scheibenbremse ist der Bremsbelag in einer Ausgangsposition axial beabstandet zur Bremsscheibe angeordnet. Um eine Bremswirkung zu erzielen, ist der Bremsbelag ausgehend von der Ausgangsposition in Richtung Bremsscheibe bewegbar, um den Reibbelag in einer Eingriffsposition mit der rotierenden Bremsscheibe in Wechselwirkung zu bringen. Der Bremsbelag ist in der Ausgangsposition gegenüber der Bremsscheibe durch ein sogenanntes Lüftspiel beabstandet, welches dazu dient, die Bremsscheibe durch Luftzirkulation zu kühlen und einen unnötigen Verschleiß des Reibbelags zu verhindern.

An wenigstens einem Bremsbelag ist ein den Bremsbelag positionierendes Federelement angeordnet, das zumindest teilweise aus einem Bimetall-Element ausgebildet ist und den axialen Abstand des Bremsbelags relativ zur Bremsscheibe in der Ausgangsposition in Abhängigkeit einer Temperatur verändert.

Das Federelement kann beispielsweise eine Belagniederhaltefeder, eine Rastklammer oder dergleichen umfassen, die der Führung des Bremsbelags dient bzw. über die der Bremsbelag im eingebauten Zustand der Bremsbelaganordnung in einer Fahrzeugscheibenbremse in Position gehalten wird und gegen Umfangskräfte abgestützt ist.

Es ist auch möglich, dass das Federelement eine Rückstellfeder umfasst, die dazu dient, den Bremsbelag nach einer Auslenkung in Richtung einer Bremsscheibe in eine Ausgangsposition zurückzubewegen.

Das den Bremsbelag positionierende Federelement steht in Eingriff mit dem Bremsbelag. Das Federelement und der Bremsbelag können beispielsweise miteinander vernietet sein, oder über ineinandergreifende Elemente miteinander verbunden sein. Über das Federelement ist die Ausgangsposition des Bremsbelags in Abhängigkeit einer Temperatur variierbar. Mit anderen Worten ist eine Größenordnung des Lüftspiels, über welches der Bremsbelag axial beabstandet zur Bremsscheibe angeordnet ist, in Abhängigkeit insbesondere einer Temperatur der Scheibenbremse veränderbar.

Dazu weist das Federelement ein Bimetall-Element auf. Das Bimetall-Element besteht aus zwei Werkstoffen bzw. Metallen und/oder Legierungen, die fest miteinander verbunden sind und sich bei gleichen Temperaturänderungen, d.h. Temperaturanstieg oder -abfall, aufgrund jeweils unterschiedlicher Ausdehnungskoeffizienten unterschiedlich stark ausdehnen oder zusammenziehen. Insbesondere kann das Bimetall-Element als ein Bimetall-Streifen ausgebildet sein, der zwei Schichten mit Werkstoffen umfasst, die unterschiedliche Ausdehnungskoeffizienten aufweisen. Im Vergleich zu einem Werkstoff mit einem niedrigeren Ausdehnungskoeffizienten, der auch als passive Komponente bezeichnet wird, zieht sich ein Werkstoff mit einem höheren Ausdehnungskoeffizienten, auch aktive Komponente genannt, beim Abkühlen mehr zusammen und verursacht eine Krümmung des Bimetall-Elements zum Werkstoff mit dem höheren Ausdehnungskoeffizienten. Bei einem Temperaturanstieg dehnt sich der Werkstoff mit dem höheren Ausdehnungskoeffizienten mehr aus und verursacht eine Krümmung des Bimetall-Elements hin zum Werkstoff mit dem niedrigeren Ausdehnungskoeffizienten.

Das Federelement nutzt die Fähigkeit des Verbiegens oder Verformens des Bimetall-Elements, um in Abhängigkeit einer Temperatur den Bremsbelag in der Ausgangsposition relativ zur Bremsscheibe axial zu positionieren bzw. das Lüftspiel einzustellen. So kann das Bimetall-Element des Federelements sich beispielsweise bei einer höheren Temperatur derart verformen oder biegen, dass das Federelement den axialen Abstand zur Bremsscheibe bzw. das Lüftspiel vergrößert, um einen Kontakt zwischen dem Reibbelag und der Bremsscheibe zu verhindern oder größtenteils zu reduzieren.

Im eingebauten Zustand der Scheibenbremse und bei einer vorgegebenen Temperatur und/oder bei Unterschreiten der vorgegebenen Temperatur ist der axiale Abstand zwischen dem Bremsbelag und der Bremsscheibe durch das Bimetall-Element des Federelements verringert, um einen Reibbeiwert zwischen Bremsbelag und der Bremsscheibe zu erzeugen.

Die vorgegebene Temperatur kann beispielsweise als der Gefrierpunkt von Wasser festgelegt sein, oder als eine Temperatur zwischen 2°C bis 5°C, insbesondere 3°C.

Bei einer niedrigen Temperatur verformt sich das Bimetall-Element derart, dass das Lüftspiel verkleinert ist und sich ein Restbremsmoment zwischen dem Bremsbelag und der Bremsscheibe einstellt. Das verhindert in vorteilhafter Weise, dass insbesondere bei Elektro- und/oder Hybridfahrzeugen, deren Bremsen durch Rekuperation eine niedrige Temperatur aufweisen, bei kalten Witterungsbedingungen Wasser auf den kalten Bremsscheiben vereist, wodurch ein Bremsweg sicherheitsgefährdend verlängert ist. Das erfindungsgemäße Federelement ermöglicht, dass bei niedrigen Temperaturen ein Reibbeiwert zwischen der Bremsscheibe und dem Reibbelag vorhanden ist, wodurch kurze Bremswege sichergestellt sind. In vorteilhafter Weise ist das Federelement robust und einfach herzustellen, und beruht auf einer mechanischen Bewegung, die weder eine Stromquelle noch Sensoren benötigt. Ein weiterer Vorteil liegt in der Nachrüstbarkeit des Federelements in schon vorhandene Scheibenbremsen, ohne diese zu verändern oder zu bearbeiten.

Die Abmessungen des Bimetall-Elements und die Werkstoffkombinationen sind nach Präzisierung der spezifischen thermischen Krümmung des Federelements und der Anwendungstemperatur angepasst. So ist das Bimetall-Element des Federelement derart gewählt, dass sich das Federelement bei und/oder unter der vorgegebenen Temperatur derart in eine Richtung verbiegt oder verkrümmt, dass der Bremsbelag in Richtung Bremsscheibe verlagert ist und den axialen Abstand zur Bremsscheibe bzw. das Lüftspiel verringert. Das Verringern des Lüftspiels ist derart gestaltet, dass sich ein Restbremsmoment einstellt, d.h. Restreibwerte zwischen dem Bremsbelag und der Bremsscheibe sind bewirkt. Bei Temperaturen über dem vorgegebenen Wert verbiegt sich das Federelement aufgrund der Verkrümmung des Bimetall-Elements in die entgegengesetzte Richtung, um den axialen Abstand des Bremsbelags relativ zur Bremsscheibe zur Vermeidung von Restreibwerten zu erhöhen.

In vorteilhafter Weise sind in Abhängigkeit der Temperatur des Federelements im eingebauten Zustand der Scheibenbremse mögliche noch vorhandene Kontakte bzw. Restreibwerte zwischen Bremsbelägen und Bremsscheibe aufgrund der Abmessungen des Lüftspiels entweder vorhanden, um die Bremsscheibe bei geringen Temperaturen zu wärmen, oder verhindert bzw. stark reduziert, um bei höheren Temperaturen einen unnötigen Verschleiß des Reibbelags zu verhindern.

Erfindungsgemäß weist das Federelement wenigstens einen Federarm auf, der an einer vom Reibbelag abgewandten Rückseite der Belagträgerplatte angreift, wobei der Federarm mit einer angewinkelt zum Federarm sowie zur Belagträgerplatte angeordneten Federbrücke verbunden ist. Der Reibbelag ist an einer Vorderseite der Belagträgerplatte angebracht, wohingegen das Federelement über den Federarm gegenüber dem Reibbelag auf einer Rückseite der Belagträgerplatte angreift. Dabei ist das den Reibbelag angreifende Federelement mit einer Federbrücke verbunden, die insbesondere annähernd orthogonal sowohl zur Belagträgerplatte als auch zum Federelement verläuft. Die Federbrücke kann eine Umfangsfläche der Belagträgerplatte überspannen. Das Federelement kann beispielsweise über eine auf die Belagträgerplatte wirkende Rückstellkraft die Bremsbeläge nach einer Auslenkung bei einem Bremsvorgang aktiv von der Bremsscheibe wegziehen. Das Bimetall-Element ist derart am Federelement angeordnet, dass es bei einer vorgegebenen geringen Temperatur eine geringere Rückstellung des Bremsbelags erzielt als bei einer höheren Temperatur.

Die Federbrücke verbindet den Federarm mit einer Rastklammer, die eine seitliche Umfangsfläche wenigstens einer Belagträgerplatte zumindest teilweise in Umfangsrichtung umgreift. Die Rastklammer kann sich entlang der seitlichen Umfangsfläche der Belagträgerplatte erstrecken und die Belagträgerplatte in Umfangsrichtung umgreifen. Die Rastklammer kann beispielsweise mit Schenkeln ausgebildet sein, die an einer Aussparung der seitlichen Umfangsfläche der Belagträgerplatte anliegen. Die Rastklammer stützt den Bremsbelag im eingebauten Zustand der Scheibenbremse gegen Umfangskräfte ab und hält ihn in Bezug auf die Bremsscheibe durch Vorspannung in radialer Richtung in Position. Die Rastklammer kann im eingebauten Zustand der Scheibenbremse insbesondere zwischen einem Bremsträger einer Sattelbremse und der seitlichen Umfangsfläche der Belagträgerplatte angeordnet sein. Die Rastklammer kann beispielsweise mit dem Bremsträger verbunden oder an ihn angeformt sein.

Das Federelement ist über den Federarm mit der Belagträgerplatte verbunden insbesondere vernietet, wobei der Federarm über die Federbrücke mit der Rastklammer verbunden ist. Die Federbrücke kann über ein Verbindungselement mit der Rastklammer verbunden sein. Das Federelement kann beispielsweise als eine Blattfeder ausgebildet sein und sich ausgehend von der Rückseite der Belagträgerplatte in Richtung Rastklammer erstrecken. Dabei ist die Federbrücke angewinkelt, insbesondere annähernd orthogonal, zum Federarm sowie zur Belagträgerplatte angeordnet, so dass das Federelement beispielsweise die seitliche Umfangsfläche der Belagträgerplatte axial überspannt, insbesondere in axialer Richtung beabstandet umgreift oder umklammert. In vorteilhafter Weise ist das Federelement derart am Bremsbelag angeordnet, dass es mit einer Rückstellkraft auf den Bremsbelag einwirken kann, um ihn nach einer Auslenkung in die Ausgangsposition zu bewegen.

Das Federelement ist einteilig mit der Rastklammer ausgebildet. Das reduziert die Teilevielfalt und trägt zur einfachen Herstellung und Montage bei. Die Federbrücke überspannt die an der Bremsscheibe sich gegenüberliegend angeordneten Bremsbeläge axial, wobei die Federbrücke die an den jeweiligen Belagträgerplatte angreifenden Federarme miteinander verbindet. Das Federelement kann beispielsweise als eine Blattfeder ausgebildet sein, deren Federbrücke sich annähernd orthogonal zu den Bremsbelägen erstreckt. Dabei verlaufen die jeweiligen Federarme abgewinkelt, insbesondere annähernd senkrecht, zur Federbrücke. Die Federarme sind jeweils mit einer Belagträgerplatte bzw. deren Rückseite verbunden, beispielsweise vernietet oder verrastet.

Im eingebauten Zustand der Scheibenbremse überspannt das Federelement die Bremsbeläge sowie die dazwischen angeordnete Bremsscheibe. Das Federelement kann als eine Belagniederhaltefeder ausgebildet sein, die im eingebauten Zustand der Bremsbelaganordnung z.B. über Halteelemente in einem Schacht oder einer Ausnehmung eines Gehäuses eines Festsattels gehalten ist. Auf diese Weise kann die Belagniederhaltefeder eine Spannkraft, insbesondere eine Niederhaltekraft, auf den Bremsbelag ausüben, um ihn nach unten zu spannen und ihn radial in Bezug auf die Bremsscheibe zu positionieren.

Bevorzugt weist der Federarm das Bimetall-Element auf. An den jeweiligen Federarmen insbesondere der Belagniederhaltefeder ist das Bimetall-Element derart angeordnet, dass die aktive Komponente mit dem hohen Ausdehnungskoeffizienten in Richtung Bremsbelag angeordnet ist und die passive Komponente mit dem niedrigen Ausdehnungskoeffizienten in die entgegengesetzte Richtung angeordnet ist, d.h. sich vom Bremsbelag abwendet. Bei der vorgegebenen niedrigen Temperatur oder einer geringeren Temperatur zieht sich die aktive Komponente mehr zusammen als die passive Komponente. Dadurch biegen sich die Federarme konvex in Bezug auf die Rückseite der Belagträgerplatte, d.h. sie biegen sich hin zur aktiven Komponente mit dem höheren Ausdehnungskoeffizienten. Diese Verkrümmung verursacht eine Verschiebung die Federarme in Richtung Bremsscheibe, was eine Verlagerung der jeweiligen Bremsbeläge in Richtung Bremsscheibe in der Ausgangsposition bewirkt. So ist der axiale Abstand bzw. das Lüftspiel in der Ausgangsposition des Bremsbelags verringert und eine Rückstellung des Bremsbelags in die Ausgangsposition ist geringer, wodurch ein Restbremsmoment sichergestellt ist.

Bei hoher Temperatur biegen sich die Federarme konkav relativ zum Bremsbelag, da sich die aktive Komponente mehr ausdehnt als die passive Komponente. So verkrümmt sich das Bimetall-Element zur passiven Komponente hin. Durch die Verkrümmung ziehen die Federarme die jeweiligen Bremsbeläge mit sich weg von der Bremsscheibe. Dadurch vergrößert sich der axiale Abstand bzw. das Lüftspiel, die Rückstellung des Bremsbelags nach einer Auslenkung ist größer, wodurch das Restbremsmoment verhindert oder stark reduziert ist.

Gemäß einer Ausführungsform weist die Federbrücke das Bimetall-Element auf. Dabei kann das Federelement beispielsweise entweder als eine mit der Rastklammer verbundene Rückstellfeder oder als eine Belagniederhaltefeder ausgebildet sein. Bei dieser Ausführungsform weist die aktive Komponente des Bimetall-Elements, d.h. die Schicht mit dem höheren Ausdehnungskoeffizienten, in Richtung Bremsbelag und die passive Komponente mit dem niedrigeren Ausdehnungskoeffizienten weist in die entgegengesetzte Richtung weg vom Bremsbelag. Bei der vorgegebenen niedrigen Temperatur zieht sich die aktive Komponente mehr zusammen als die passive Komponente. Dadurch biegt sich die Federbrücke hin zur aktiven Komponente, wodurch die Federarme zusammen mit den Bremsbelägen in Richtung Bremsscheibe verlagert sind. Dadurch ist der axiale Abstand bzw. das Lüftspiel verringert und eine Rückstellung des Bremsbelags in die Ausgangsposition ist geringer. Die Ausgangsposition des Bremsbelags ist axial derart verschoben, dass sich ein Restbremsmoment zwischen dem Bremsbelag und der Bremsscheibe einstellt. In vorteilhafter Weise stellt das Federelement im eingebauten Zustand der Scheibenbremse sicher, dass die Bremsscheibe sich aufheizt. Die das Bimetall-Element aufweisende Federbrücke ist also derart ausgebildet, dass bei der vorgegebenen niedrigen Temperatur und/oder in einem Temperaturbereich darunter, bei dem z.B. die Gefahr besteht, dass Wasser an der Bremsscheibe vereist, sich derart krümmt, dass der axiale Abstand zwischen Bremsscheibe und Bremsbelag verringert ist.

Bei höheren Temperaturen, bei denen Wasser an der Bremsscheibe nicht vereist, biegt sich die Federbrücke in die entgegengesetzte Richtung. d.h. hin zur passiven Komponente weg vom Bremsbelag, wodurch die Federarme auseinandergezogen sind. Dadurch vergrößert sich in der Ausgangsposition des Bremsbelags der axiale Abstand zur Bremsscheibe bzw. das Lüftspiel, und die durch das Federelement bewirkte Rückstellung des Bremsbelags nach einer Auslenkung ist größer, wodurch das Restbremsmoment verhindert oder stark reduziert ist.

Bevorzugt weist die Federbrücke einen Verbindungsabschnitt auf, über den wenigstens zwei sich in Längsrichtung des Bremsbelags erstreckende Längsschenkel verbunden sind. Die Längsschenkel sind über den Verbindungsabschnitt mit der Federbrücke verbunden, beispielsweise vernietet, verklebt oder dergleichen. Alternativ ist es möglich, dass die Längsschenkel einteilig mit dem Federelement ausgebildet sind, wobei das Federelement eine einteilige Kreuzfeder ausbildet.

Der Verbindungsabschnitt kann beispielsweise in einem zentralen Bereich der Federbrücke ausgebildet sein. Die Längsschenkel können eine längliche Form aufweisen. Sie können beispielsweise aus einem Streifen Federblech hergestellt sein, der geknickt oder gekrümmt ist. An ihren jeweiligen vom Verbindungsabschnitt abweisenden Enden können sie einen Anlagebereich aufweisen, der im eingebauten Zustand der Scheibenbremse am Gehäuse insbesondere an Querträgern eines Festsattels angreift. Die Längsschenkel dienen dazu, die Bremsbeläge im eingebauten Zustand der Scheibenbremse in radialer Richtung der Bremsscheibe insbesondere mit einer tangential wirkenden Spannkraft vorzuspannen.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

**In** der Zeichnung bedeutet:
- Fig. 1: ein Federelement einer erfindungsgemäßen Bremsbelaganordnung bei einer vorgegebenen niedrigen Temperatur;
- Fig. 2: ein Federelement einer erfindungsgemäßen Bremsbelaganordnung bei einer höheren Temperatur;
- Fig. 3: ein Federelement einer erfindungsgemäßen Bremsbelaganordnung bei einer vorgegebenen niedrigen Temperatur;
- Fig. 4: ein Federelement einer erfindungsgemäßen Bremsbelaganordnung bei einer höheren Temperatur;
- Fig. 5: eine Festsattelbremse, die eine Bremsbelaganordnung aufweist, die nicht Teil der Erfindung ist;
- Fig. 6: ein Federelement einer erfindungsgemäßen Bremsbelaganordnung; und
- Fig. 7: eine Schwimmsattelbremse, die eine erfindungsgemäße Bremsbelaganordnung aufweist.

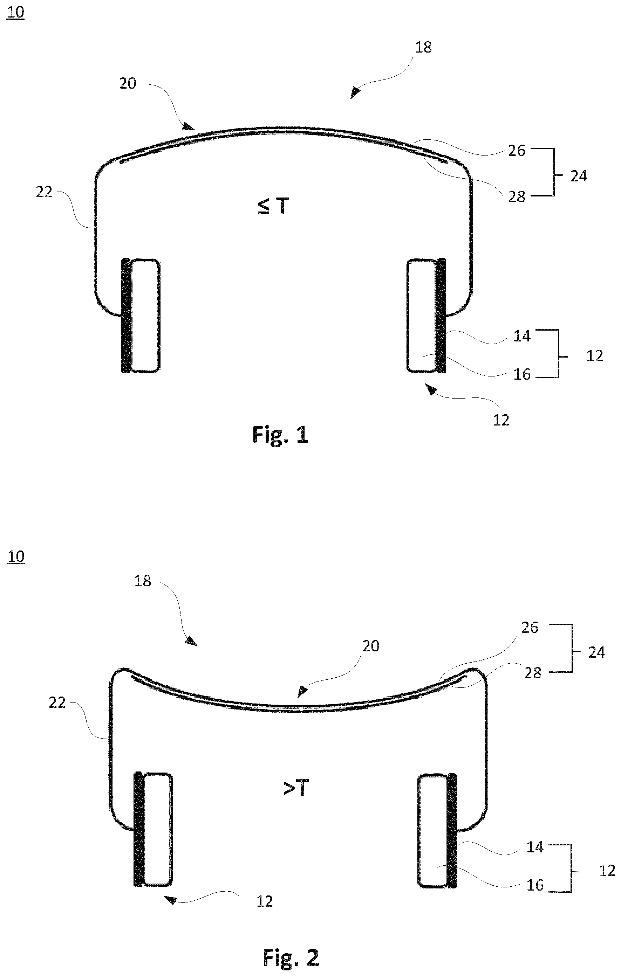

In Fig. 1 bis Fig. 4 ist eine insgesamt mit der Bezugsziffer 10 bezeichnete Bremsbelaganordnung dargestellt.

Fig. 1 stellt eine Bremsbelaganordnung 10 dar, die vorliegend zwei axial zueinander beabstandete Bremsbeläge 12 umfasst, die jeweils eine Bremsbelagträgerplatte 14 und einen daran befestigten Reibbelag 16 aufweisen. Zwischen den einander zugewandten Reibbelägen 16 ist im eingebauten Zustand der Bremsbelaganordnung 10 eine vorliegend nicht dargestellte Bremsscheibe angeordnet, mit der die Reibbeläge 16 bei einem Bremsvorgang mittels einer vorliegend ebenfalls nicht dargestellten Zuspanneinrichtung von einer Ausgangsposition in eine Eingriffsposition, bei der sie in Wechselwirkung mit der Bremsscheibe stehen, gebracht werden.

An den Bremsbelägen 12 ist ein Federelement 18 angeordnet, welches vorliegend beide Bremsbeläge 12 überspannt. Das Federelement 18 ist als eine Blattfeder ausgebildet und weist eine Federbrücke 20 auf, die zwei Federarme 22 miteinander verbindet. Die Federarme 22 erstrecken sich jeweils abgewinkelt zur Federbrücke 20. Vorliegend verlaufen sie annähernd senkrecht zur Federbrücke 20.

An seinen jeweiligen Enden greift das Federelement 18 an einer vom Reibbelag 16 abgewandten Rückseite der Belagträgerplatte 14 an. Das Federelement 18 ist mit der Belagträgerplatte 14 beispielsweise vernietet oder es kann z.B. über eine Rastnase mit einem Rastvorsprung der Belagträgerplatte 14 in Eingriff stehen.

Im eingebauten Zustand der Bremsbelaganordnung 10 in eine Fahrzeugscheibenbremse 100 sind die Bremsbeläge 12 durch das vorliegende Federelement 18 axial sowie radial vorgespannt. Das Federelement 18 übt über die Federarme 22 eine Rückstellkraft auf die Bremsbeläge 12 aus, um sie nach einer Auslenkung in Richtung Bremsscheibe zurück in die Ausgangsposition zu bringen, bei der die Bremsbeläge 12 über ein Lüftspiel zur Bremsscheibe beabstandet sind.

Erfindungsgemäß ist das Federelement 18 zumindest teilweise aus einem Bimetall-Element 24 ausgebildet. In Fig. 1 und Fig. 2 sind jeweils eine Ausführungsform des Federelements 18 dargestellt, bei der das Bimetall-Element 24 an der Federbrücke 20 angeordnet ist. Die Federbrücke 20 weist vorliegend einen Bimetallstreifen 24 auf, der aus zwei fest miteinander verbunden Schichten 26, 28 unterschiedlicher Metalle oder Legierungen ausgebildet ist. Die Schichten 26, 28 können zum Beispiel durch Nieten, Schweißen, Kleben oder Walzen miteinander verbunden sein. Sie weisen unterschiedliche Ausdehnungskoeffizienten auf. Die einen niedrigen Ausdehnungskoeffizienten aufweisende erste Schicht 26 ist vorliegend vom Bremsbelag 12 abgewandt angeordnet. Die jeweils andere zweite Schicht 28 weist einen höheren Ausdehnungskoeffizienten auf und ist gegenüberliegend der ersten Schicht 26 in Richtung zum Bremsbelag 12 angeordnet. Die jeweiligen Schichten 26, 28 verändern sich bei gleicher Temperaturänderung um unterschiedliche Strecken. Das äußert was sich als Verbiegung des Bimetallstreifens 24 und folglich verformt sich das Federelement 18 entsprechend.

In Fig. 1 ist das Federelement 18 bei einer vorgegebenen niedrigen Temperatur T dargestellt. Bei niedriger Temperatur T zieht sich die zweite Schicht 28 mit dem höheren Ausdehnungskoeffizienten mehr zusammen als die erste Schicht 26. Dadurch verkrümmt sich die Federbrücke 20 hin zur zweiten Schicht 28, die auch als aktive Komponente bezeichnet ist. Diese Verformung verursacht eine Verringerung eines Axialabstandes zwischen den Federarmen 22, die wiederum den jeweiligen Bremsbelag 12 in Richtung einer vorliegend nicht dargestellten Bremsscheibe verlagern. Dadurch ist das Lüftspiel, d.h. der axiale Abstand zwischen dem Bremsbelag 12 und der Bremsscheibe in der Ausgangposition des Bremsbelags 12 derart verringert, dass sich ein Restbremsmoment zwischen dem Bremsbelag 12 und der Bremsscheibe einstellt. Bei einem Bremsvorgang wird der Bremsbelag 12 in Richtung Bremsscheibe ausgelenkt und das Federelement 18 dient nach der Auslenkung zur Rückstellung des Bremsbelags 12, um das Lüftspiel wieder herzustellen. Durch die Verkrümmung des Bimetall-Elements 24 bei der vorgegebenen niedrigen Temperatur T kann das Federelement 18 lediglich eine geringe Rückstellung des Bremsbelags 12 bewirken. Dadurch bleibt ein Restreibwert zwischen dem Bremsbelag 12 und der Bremsscheibe bestehen und die Bremsscheibe ist insbesondere trotz Rekuperation leicht erhitzt.

In Fig. 2 ist eine Darstellung des Federelements 18 nach Fig. 1 bei einer höheren Temperatur T. Wie vorliegend dargestellt ist, verbiegt sich das Bimetall-Element 24 bzw. die Federbrücke 20 in die entgegengesetzte Richtung bei Temperaturen T über dem vorgegebenen Wert. Bei Erwärmung dehnt sich die zweite Schicht 28 mehr aus als die erste Schicht 26. Dadurch erfolgt eine charakteristisch konkave Verbiegung des Bimetallstreifens 24. Das hat zur Folge, dass die jeweiligen Federarme 22 des Federelements 18 sich in entgegensetzte Richtungen voneinander weg bewegen, wodurch ein Axialabstand zwischen den Federarmen 22 erhöht ist. Da die jeweiligen Bremsbeläge 12 von den Federarmen 22 mitgezogen werden, erhöht sich der axiale Abstand des Bremsbelags 12 zur Bremsscheibe in der Ausgangsposition des Bremsbelags 12. Das hat ein größeres Lüftspiel zur Folge, welches bei höheren Temperaturen T ausreichend groß ist, dass Restreibwerte zwischen dem Bremsbelag 12 und der Bremsscheibe vermieden bzw. stark reduziert sind. Nach einer Auslenkung des Bremsbelags 12 in Richtung Bremsscheibe bei einem Bremsvorgang bewirkt das Federelement 18 eine größere Rückstellung des Bremsbelags 12 als bei geringen Temperaturen T.

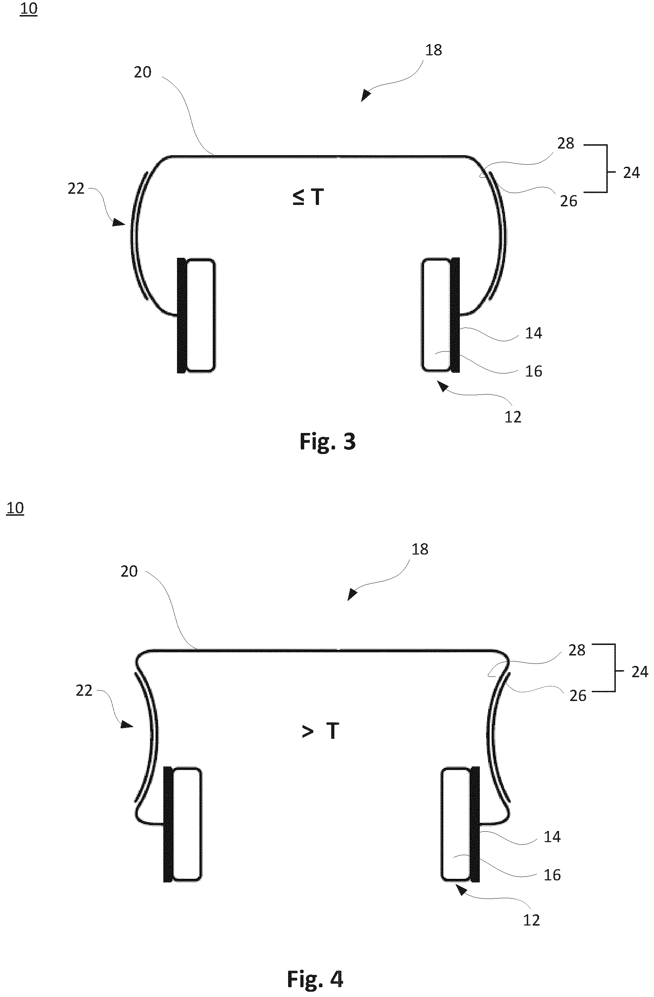

In Fig. 3 und Fig. 4 sind eine alternative Ausführungsform des Federelements 18 dargestellt, bei der die jeweiligen Federarme 22 ein Bimetall-Element 24 aufweisen. Das Bimetall-Element 24 ist vorliegend als ein Bimetallstreifen ausgebildet. Die erste Schicht 26 mit dem niedrigen Ausdehnungskoeffizienten ist auf einer Außenseite des Federarms 22 vom Bremsbelag 12 abwendet angeordnet und die zweite Schicht 28 mit dem höheren Ausdehnungskoeffizienten ist gegenüber der ersten Schicht 26 auf einer Innenseite des Federarms 22 in Richtung Brembelag 12 angeordnet.

Wie in Fig. 3 dargestellt ist, zieht sich die zweite Schicht 28 bei der vorgegebenen niedrigen Temperatur T mehr zusammen als die erste Schicht 26. Das Bimetall-Element 24 biegt sich hin zur zweiten Schicht 28. Dadurch verkrümmen sich die Federarme 22 konvex bezüglich des Bremsbelags 12 und ein Abstand zwischen den beiden Federarmen 22 ist verringert, wobei die jeweiligen Federarme 22 die Bremsbeläge 12 mit sich in Richtung Bremsscheibe ziehen, wodurch das Lüftspiel verringert ist. Das Federelement 18 übt eine Rückstellkraft auf die Bremsbeläge 12 aus, um sie nach einer Auslenkung in die Ausgangposition zu bringen. Die Rückstellung der Bremsbeläge 12 ist bei niedriger Temperatur T gering, wodurch ein Restbremsmoment zwischen Bremsbelag 12 und Bremsscheibe eingestellt ist und die Bremsscheibe sich aufheizt.

In Fig. 4 ist ein Federelement 18 gemäß Fig. 3 bei einer erhöhten Temperatur T dargestellt. Das Bimetall-Element 24 verbiegt sich vorliegend in die entgegengesetzte Richtung, denn die zweite Schicht 28 dehnt sich mehr aus als die erste Schicht 26. Das Bimetall-Element 24 biegt sich in Richtung erste Schicht 26 bzw. biegen sich die Federarme 22 konkav in Bezug auf den Bremsbelag 12, wodurch die Federarme 22 sich in entgegengesetzte Richtungen voneinander weg verlagern und sich ein Abstand zwischen ihnen vergrößert. Die Federarme 22 ziehen die Bremsbeläge 12 mit sich und das Lüftspiel vergrößert sich. Auf diese Weise ist die Rückstellung der Bremsbeläge 12 durch das Federelement 18 bei erhöhter Temperatur T stärker, wodurch ein Restbremsmoment zwischen Bremsbelag 12 und Bremsscheibe verhindert oder reduziert ist.

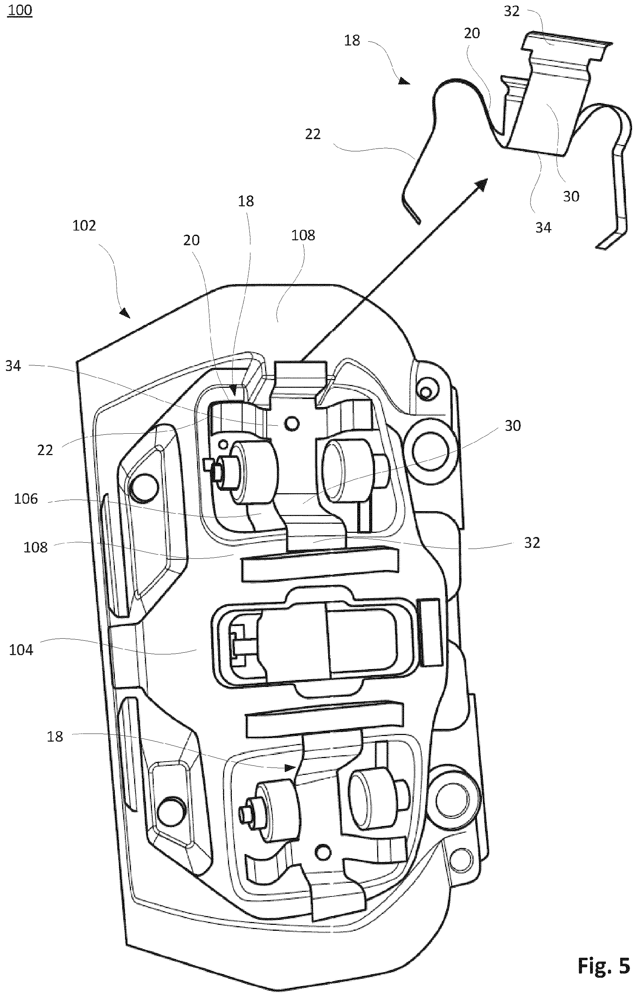

In Fig. 5 ist eine insgesamt mit der Bezugsziffer 100 bezeichnete Ansicht einer Scheibenbremse für ein Fahrzeug dargestellt. Die Scheibenbremse 100 weist ein rahmenartiges Gehäuse 102 mit einem Bremssattel 104 auf, der vorliegend als ein Festsattel ausgebildet ist. Das Gehäuse 102 dient als Abstützkörper für eine vorliegend nicht dargestellte Bremsbelaganordnung 10, die in einem Schacht 106 oder einer Ausnehmung des Gehäuses 102 angeordnet ist. Die Bremsbelaganordnung 10 weist zwei zueinander beabstandete Bremsbeläge 12 auf. Die bei einem Bremsvorgang erzeugten Reaktionskräfte werden über die üblicherweise aus Metall bestehenden Belagträgerplatten 14 der jeweiligen Bremsbeläge 12 auf das Gehäuse 102 übertragen.

Im Schacht 106 des Gehäuses 102 sind vorliegend zwei erfindungsgemäße Federelemente 18 an den Bremsbelägen 12 angeordnet. Die Federelemente 18 sind vorliegend jeweils als eine kreuzförmige Bremsbelagniederhaltefeder ausgebildet, die beispielsweise mittels hier nicht dargestellten Halteelementen, wie einem Haltestift oder Haltebügel, einem gebogenen Draht oder einem Klemmelement im Schacht 106 an dem Gehäuse 102 gehalten wird, um einen sicheren Sitz zu ermöglichen. Über die Bremsbelagniederhaltefeder 18 sind die Bremsbeläge 12 in radialer Richtung der vorliegend nicht gezeigten Bremsscheibe einwärts vorgespannt.

Das in Fig. 5 dargestellte Federelement ist nicht Teil der Erfindung. Das Federelement 18 weist zwei parallel zur vorliegend nicht dargestellten Bremsscheibe verlaufende Federschenkel 30 auf, die an ihren jeweiligen Enden mit Anlagevorsprüngen 32 ausgebildet sind, die sich an Gehäusequerträgern 108 des Bremssattels 104 abstützen. Die Federschenkel 30 sind mit einem Verbindungsabschnitt 34 einer Federbrücke 20 des Federelements 18 verbunden, insbesondere vernietet. Die Federbrücke 20 überspannt die Bremsbeläge 12 sowie die Bremsscheibe axial und verbindet zwei Federarme 22 miteinander. Die Federarme 22 erstrecken sich nahezu orthogonal abgewinkelt zur Federbrücke 20 in den Schacht 106 hinein und greifen jeweils an einer Rückseite einer Belagträgerplatte 14 des Bremsbelags 12 an. An der Federbrücke 20 und/oder den Federarmen 22 ist das Bimetall-Element 24 ausgebildet. Wie in den Figuren 1 bis 4 oben beschrieben ist, verändert sich die Form des Bimetall-Elements 24 und somit die Form des Federelements 18 in Abhängigkeit einer Temperatur T, wobei über die Formveränderung des Federelements 18 der axiale Abstand in der Ausgangsposition bzw. das Lüftspiel zwischen dem Bremsbelag 12 und der Bremsscheibe variierbar ist. Mit anderen Worten ist die Ausgangsposition des Bremsbelags 12 in Abhängigkeit der Temperatur des Federelements 18 beeinflusst. Das Federelement 18 dient dazu bei kalten Temperaturen T eine geringes Lüftspiel mit einem einhergehenden Restbremsmoment zur Erwärmung der Bremsscheibe zu gewährleisten. Bei warmen Temperaturen T vergrößert das Federelement 18 das Lüftspiel, um ein Restbremsmoment zu reduzieren oder gänzlich zu vermeiden.

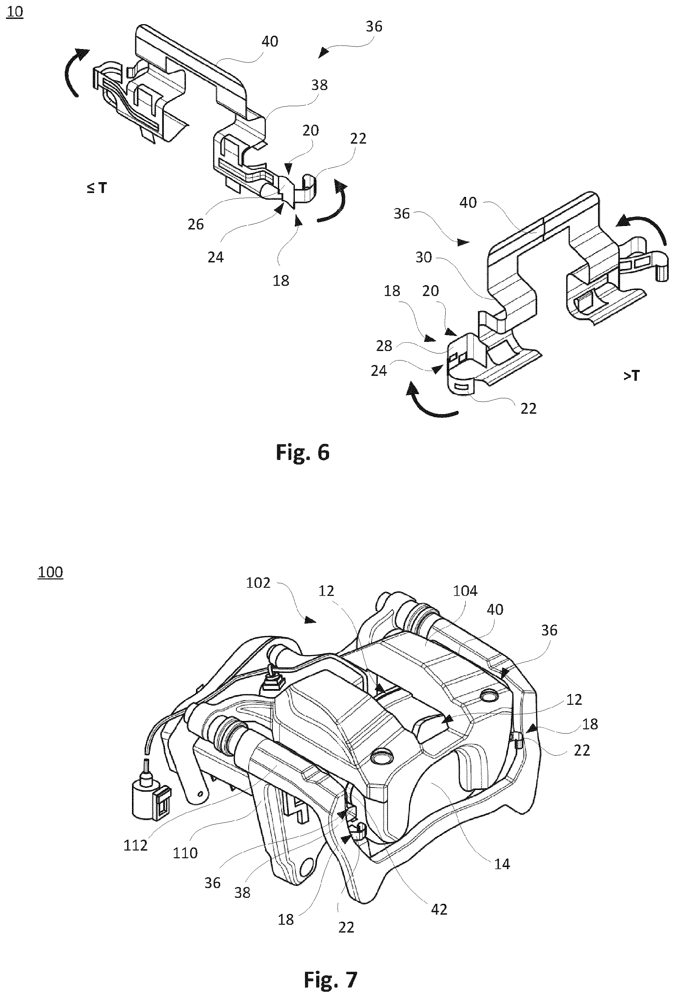

In Fig. 6 ist eine Ausführungsform eines Federelements 18 der vorliegenden Erfindung dargestellt. Vorliegend ist das Federelement 18 einteilig mit einer Rastklammer 36 ausgebildet, über die das Federelement 18 an einem Bremsbelag 12 anordenbar ist, um mit einer Rückstellkraft auf den Bremsbelag 12 einzuwirken. Alternativ können die Rastklammer 36 und das Federelement 18 zweiteilig ausgebildet sein und über ein Verbindungselement miteinander verbunden sein.

Die Rastklammer 36 ist vorliegend mit zwei Schenkeln 38 ausgebildet, die über einen zentralen Abschnitt 40, der eine vorliegend nicht dargestellte Bremsscheibe überspannt, miteinander verbunden sind. Die Schenkel 38 liegen jeweils an einer seitlichen Umfangsfläche 42 einer vorliegend nicht dargestellten Belagträgerplatte 14 an und erstrecken sich entlang der seitlichen Umfangsfläche 42. Vorliegend weisen die Schenkel 38 jeweils eine Kontur auf, die z.B. in Aussparungen der Umfangsfläche 42 der Belagträgerplatte 14 eingreifen. Die Rastklammer 36 umgreift die Belagträgerplatte 14 in Umfangsrichtung zumindest teilweise. Die Rastklammer 36 stützt den Bremsbelag 12 im eingebauten Zustand der Bremsbelaganordnung 10 in einer Scheibenbremse 100 gegen Umfangskräfte ab und hält ihn in Bezug auf die Bremsscheibe durch Vorspannung in radialer Richtung in Position.

Das Federelement 18 weist einen Federarm 22 auf, der an der Belagträgerplatte 14 angreift. Der Federarm 22 kann beispielsweise mit der Belagträgerplatte 14 vernietet sein. Der die Belagträgerplatte 14 angreifende Federarm 22 ist über eine Federbrücke 20 mit der Rastklammer 36 verbunden. Das Federelement 18 überspannt und umklammert vorliegend die seitliche Umfangsfläche 42 der Belagträgerplatte 14 axial und der Federarm 22 erstreckt sich in Richtung Rastklammer 36.

Vorliegend weist die Federbrücke 20 das Bimetall-Element 24 auf. Der Werkstoff mit dem höheren Ausdehnungskoeffizienten bzw. die zweite Schicht 28 ist in Richtung Bremsbelag 28 angeordnet und der Werkstoff mit dem niedrigeren Ausdehnungskoeffizienten bzw. die erste Schicht 26 ist von dem Bremsbelag 12 abgewandt angeordnet. Bei einer hohen Temperatur T, wie in der rechten Darstellung der Fig.6 gezeigt ist, dehnt sich die zweite Schicht 28 im Gegensatz zu der ersten Schicht 26 stärker aus. Dadurch verbiegt sich die Federbrücke 20 in Richtung erster Schicht 26 bzw. weg von der Rückseite der Belagträgerplatte 14. Dadurch erhöht sich der axiale Abstand zwischen dem Bremsbelag 12 und der Bremsscheibe, d.h. die Ausgangposition des Bremsbelags 12 verlagert sich weg von der Bremsscheibe. Folglich erhöht sich das Lüftspiel, wodurch Restreibwerte zwischen dem Bremsbelag 12 und der Bremsscheibe entfallen oder größtenteils vermieden sind.

Bei einer niedrigen Temperatur T, wie in der linken Darstellung der Fig. 6 gezeigt ist, zieht sich die zweite Schicht 28 mehr zusammen als die erste Schicht 26. Dadurch krümmt sich das Federelement 18 in eine Richtung hin zur zweiten Schicht 28 und verschiebt den Bremsbelag 12 in Richtung Bremsscheibe. Das hat zur Folge, dass der axiale Abstand des Bremsbelags 12 zur Bremsscheibe in der Ausgangsposition des Bremsbelags 12 verringert ist. Dadurch ist eine mögliche Rückstellung des Bremsbelags 12 in Axialrichtung nach einer Auslenkung des Bremsbelags 12 verringert, und das Lüftspiel ist derart verringert, dass sich ein Restbremsmoment zwischen dem Bremsbelag 12 und der Bremsscheibe einstellt, wodurch sich die Bremsscheibe leicht aufheizt.

In Fig. 7 ist eine Scheibenbremse 100 dargestellt, umfassend ein rahmenartiges Gehäuse 102, dessen Grundkörper vorliegend als ein Schwimmsattel oder Faustsattel ausgebildet ist, sowie einen Bremsabstützkörper bzw. einen Bremsträger 110, der die Bremsbeläge 12 eine Bremsbelaganordnung 10 spielbehaftet führt oder lagert. Die Bremsbelaganordnung 10 weist vorliegend zwei Bremsbeläge 12 auf, die in ihrer Ausgangsposition jeweils über einen axialen Abstand an einer vorliegend nicht dargestellten Bremsscheibe angeordnet sind. Im Gehäuse 102 ist eine Zuspanneinrichtung aufgenommen, über die die Bremsbeläge 12 bei einem Bremsvorgang gegen die Bremsscheibe beweglich sind.

An den Bremsbelägen 12 ist ein erfindungsgemäßes Federelement 18 angeordnet, wie es oben in Fig. 6 beschrieben ist. Das Federelement 18 ist über eine Rastklammer 36 am Bremsbelag 12 angeordnet. Die Rastklammer 36 ist zumindest teilweise zwischen dem Bremsträger 110 und den Bremsbelägen 12, insbesondere einer seitlichen Umfangsfläche 42 der Belagträgerplatte 14 des Bremsbelags 12, angeordnet. Die Rastklammer 36 ist an einem Querelement 112 des Bremsträgers 110 angeordnet und weist Schenkel 38 auf, die beispielsweise am Querelement 112 ausgebildete Vorsprünge umgreifen können. Die Rastklammer 36 kann an den Bremsträger 110 angeformt sein oder fest mit ihm verbunden sein.

Die Rastklammer 36 umgreift die seitliche Umfangsfläche 42 einer Belagträgerplatte 14 eines Bremsbelags 12 in Umfangsrichtung. Dabei erstrecken sich die Schenkel 38 der Rastklammer 36 jeweils entlang der seitlichen Umfangsfläche 42 der Belagträgerplatte 14. Die Rastklammer 36 stützt den Bremsbelag 12 im eingebauten Zustand der Bremsbelaganordnung 10 in der Scheibenbremse 100 gegen Umfangskräfte ab und hält ihn in Bezug auf die Bremsscheibe durch Vorspannung in radialer Richtung in Position.

Das erfindungsgemäße Federelement 18 übt nach einer Auslenkung des Bremsbelags 12 eine Rückstellkraft auf den Bremsbelag 12 aus. Das Federelement 18 ist über einen Federarm 22 mit einer Rückseite der Belagträgerplatte 14 verbunden, wobei der Federarm 22 über eine hier nicht dargestellte Federbrücke 20, die zumindest teilweise mit einem Bimetall-Element 24 ausgebildet ist, an der Rastklammer 36 angeordnet ist. Das Federelement 18 krümmt sich bei niedriger Temperatur T in Richtung Belagträgerplatte 14, wodurch die Ausgangsposition des Bremsbelags 12 sich in Richtung Bremsscheibe verlagert und das Lüftspiel derart gering ist, dass ein Restreibwert zwischen den Bremsbelägen 12 und der Bremsscheibe vorhanden ist. Bei höheren Temperaturen T biegt sich das Bimetall-Element 24 des Federelements 18 in die entgegengesetzte Richtung. Dadurch zieht das Federelement 18 die Bremsbeläge 12 in einer Ausgangsposition weiter auseinander und es entsteht ein Lüftspiel ohne Restreibwerte.

## Patentansprüche

1. Scheibenbremse (100) eines Fahrzeugs, umfassend ein Gehäuse (102), das eine an einer Bremsscheibe angeordnete Bremsbelaganordnung (10) überspannt, wobei die Bremsbelaganordnung (10) wenigstens einen in einem Bremsabstützkörper geführten Bremsbelag (12) aufweist, der im eingebauten Zustand der Scheibenbremse (100) axial beabstandet zur Bremsscheibe in einer Ausgangsposition angeordnet ist und zum Erzielen einer Bremswirkung mit der Bremsscheibe in Wechselwirkung bringbar ist, wobei der Bremsbelag (12) eine Belagträgerplatte (14) aufweist, an der ein Reibbelag (16) angebracht ist, wobei
an wenigstens einem Bremsbelag (12) ein den Bremsbelag (12) positionierendes Federelement (18) angeordnet ist, das zumindest teilweise aus einem Bimetall-Element (24) ausgebildet ist und den axialen Abstand des Bremsbelags (12) relativ zur Bremsscheibe in der Ausgangsposition in Abhängigkeit einer Temperatur (T) verändert, wobei
bei einer vorgegebenen Temperatur (T) und/oder bei Unterschreiten der vorgegebenen Temperatur (T) das Federelement (18) durch das Bimetall-Element (24) den axialen Abstand zur Bremsscheibe verringert, um einen Reibbeiwert zwischen dem Bremsbelag (12) und der Bremsscheibe zu erzeugen,
**dadurch gekennzeichnet, dass**
das Federelement (18) wenigstens einen Federarm (22) aufweist, der an einer vom Reibbelag abgewandten Rückseite der Belagträgerplatte (14) angreift, wobei der Federarm (22) mit einer angewinkelt zum Federarm und zur Belagträgerplatte (14) angeordneten Federbrücke (20) verbunden ist, wobei die Federbrücke (20) den Federarm (22) mit einer Rastklammer (36) verbindet, welche eine seitliche Umfangsfläche (42) der Belagträgerplatte (14) zumindest teilweise in Umfangsrichtung umgreift, wobei das Federelement (18) einteilig mit der Rastklammer (36) ausgebildet ist, wobei die Federbrücke (20) die an der Bremsscheibe sich gegenüberliegend angeordneten Bremsbeläge (12) axial überspannt, wobei die Federbrücke (20) die an den jeweiligen Belagträgerplatte (14) angreifenden Federarme (22) miteinander verbindet.

2. Scheibenbremse nach Anspruch 1,
**dadurch gekennzeichnet, dass**
die Federarme (22) das Bimetall-Element (24) aufweisen.

3. Scheibenbremse nach einem der Ansprüche 1,
**dadurch gekennzeichnet, dass**
die Federbrücke (20) das Bimetall-Element (24) aufweist.

4. Scheibenbremse nach einem der vorangehenden Ansprüche, **dadurch gekennzeichnet, dass**
die Federbrücke (20) einen Verbindungsabschnitt (34) aufweist, über den wenigstens zwei sich in Längsrichtung des Bremsbelags (12) erstreckende Federschenkel (30) verbunden sind.

## Claims

1. A disc brake (100) of a vehicle, comprising a housing (102), which spans a brake lining arrangement (10) arranged on a brake disc, wherein the brake lining arrangement (10) comprises at least one brake lining (12) guided in a brake backing, which, when the disc brake (100) is arranged in an starting position axially spaced from the brake disc and can be brought into interaction with the brake disc to achieve a braking effect, wherein the brake lining (12) comprises a lining carrier plate (14) to which a friction lining (16) is attached, wherein
on at least one brake lining (12) is arranged a spring element (18) that positions the brake lining (12), which is formed at least partially from a bimetallic element (24) and changes the axial distance of the brake lining (12) relative to the brake disc in the starting position as a function of a temperature (T), wherein
at a specified temperature (T) and/or when the temperature falls below the specified temperature (T), the spring element (18) reduces the axial distance to the brake disc via the bimetallic element (24) in order to generate a coefficient of friction between the brake lining (12) and the brake disc,
**characterized in that**
the spring element (18) has at least one spring arm (22) that engages a rear side of the lining carrier plate (14) facing away from the friction lining, wherein the spring arm (22) is connected to a spring bridge (20) arranged at an angle to the spring arm and to the lining carrier plate (14), wherein the spring bridge (20) connects the spring arm (22) to a locking clip (36), which at least partially encircles a lateral peripheral surface (42) of the lining carrier plate (14) at least partially in the circumferential direction, wherein the spring element (18) is formed integrally with the locking clip (36), wherein the spring bridge (20) spans the brake linings (12) arranged opposite one another on the brake disc axially, wherein the spring bridge (20) connects the spring arms (22) engaging the respective lining carrier plates (14) to one another.

2. The disc brake according to claim 1,
**characterized in that**
the spring arms (22) have the bimetallic element (24).

3. The disc brake according to any one of claims 1,
**characterized in that**
the spring bridge (20) has the bimetallic element (24).

4. The disc brake according to any one of the preceding claims,
**characterized in that**
the spring bridge (20) has a connecting section (34) via which at least two spring legs (30) extending in the longitudinal direction of the brake lining (12) are connected.

## Revendications

1. Frein à disque (100) d'un véhicule, comprenant un boîtier (102) qui enjambe un ensemble de garniture de frein (10) agencé au niveau d'un disque de frein, dans lequel l'ensemble de garniture de frein (10) présente au moins une garniture de frein (12) guidée dans un corps d'appui de frein qui est agencée dans l'état intégré du frein à disque (100) à distance axialement par rapport au disque de frein dans une position de départ et peut être amenée en interaction pour l'obtention d'une action de freinage avec le disque de frein, dans lequel la garniture de frein (12) présente une plaque de support de garniture (14), au niveau de laquelle une garniture de friction (16) est montée, dans lequel
un élément de ressort (18) positionnant la garniture de frein (12) est agencé au niveau d'au moins une garniture de frein (12), lequel est formé au moins en partie en un élément bimétallique (24) et modifie la distance axiale de la garniture de frein (12) par rapport au disque de frein dans la position de départ en fonction d'une température (T), dans lequel
à une température prédéfinie (T) et/ou en cas de non-atteinte de la température prédéfinie (T), l'élément de ressort (18) diminue par l'élément bimétallique (24) la distance axiale par rapport au disque de frein afin de générer un coefficient de friction entre la garniture de frein (12) et le disque de frein,
**caractérisé en ce que**
l'élément de ressort (18) présente au moins un bras de ressort (22) qui agit sur un côté arrière éloigné de la garniture de friction de la plaque de support de garniture (14), dans lequel le bras de ressort (22) est relié à un pont de ressort (20) agencé de manière coudée au bras de ressort et à la plaque de support de garniture (14), dans lequel le pont de ressort (20) relie le bras de ressort (22) à une pince à encliquetage (36) qui entoure au moins partiellement dans le sens périphérique une surface périphérique (42) latérale de la plaque de support de garniture (14), dans lequel l'élément de ressort (18) est formé d'un seul tenant avec la pince à encliquetage (36), dans lequel le pont de ressort (20) enjambe axialement les garnitures de frein (12) agencées à l'opposé sur le disque de frein, dans lequel le pont de ressort (20) relie les bras de ressort (22) agissant sur la plaque de support de garniture (14) respective entre eux.

2. Frein à disque selon la revendication 1,
**caractérisé en ce que**
les bras de ressort (22) présentent l'élément bimétallique (24).

3. Frein à disque selon la revendication 1,
**caractérisé en ce que**
le pont de ressort (20) présentent l'élément bimétallique (24).

4. Disque à frein selon l'une quelconque des revendications précédentes,
**caractérisé en ce que**
le pont de ressort (20) présente une section de liaison (34), par le biais de laquelle au moins deux branches de ressort (30) s'étendant dans le sens longitudinal de la garniture de frein (12) sont reliées.
